# EUROPÄISCHE PATENTANMELDUNG

(11) **EP 1 228 711 A2**
(43) Veröffentlichungstag der Anmeldung: **07.08.2002**
(21) Anmeldenummer: 01126168.2
(22) Anmeldetag: 03.11.2001
(51) Int. Cl.: A41D 13/018, B62J 23/00

(54) **Motorradschutzanzug**

(30) Priorität: 31.01.2001 DE 10104019
(71) Anmelder: ROBERT BOSCH GMBH, 70442 Stuttgart (DE)
(72) Erfinder: Mattes, Bernhard, 74343 Sachsenheim (DE)

(57) **Zusammenfassung**

Es wird ein Motorradschutzanzug vorgeschlagen, der wenigstens einen Airbag (3,4) aufweist, wobei die Energieversorgung und die Datenkommunikation mit dem Motorrad über eine drahtlose Verbindung realisiert wird. Für die Energieübertragung werden Spulen (5) in den Gesäßflächen des Motorradschutzanzuges und für die Datenübertragung Funkstationen im Mikrowellenbereich eingesetzt.

## Beschreibung

### Stand der Technik

Die Erfindung geht aus von einem Motorradschutzanzug nach der Gattung des unabhängigen Patentanspruchs.

Der italienische Zweiradhersteller Aprilia bietet einen Airbag für Motorradfahrer an. Der Airbag wird dabei wie eine Weste getragen und bläst sich bei einem Sturz schlagartig auf. Mit einer Reißleine wird der Airbag am Motorrad befestigt. Sobald sich das Motorrad über ein bestimmtes Maß neigt, aktiviert die Reißleine ein Sicherheitsventil. Innerhalb von 3 Hundertstelsekunden füllt sich der Airbag.

### Vorteile der Erfindung

Der erfindungsgemäße Motorradschutzanzug mit den Merkmalen des unabhängigen Patentanspruchs hat demgegenüber den Vorteil, daß keine mechanische Befestigung zwischen Motorradschutzanzug und dem Motorrad für den Airbag besteht. Dies wird durch eine drahtlose Informations- und Energieübertragung realisiert. Damit sind der Motorradfahrer und eventuelle Beifahrer beweglicher und ungestört durch die Rückhaltemittel. Dies vermeidet dann beispielsweise ein Vergessen einer Steckverbindungsherstellung beim Aufsteigen oder eben einer entsprechenden Trennung beim Absteigen und erhöht so den Akzeptanzgrad von solchen Rückhaltemitteln für Motorradfahrer und deren Begleiter.

Durch die in den abhängigen Ansprüchen aufgeführten Maßnahmen und Weiterbildungen sind vorteilhafte Verbesserungen des im unabhängigen Patentanspruch angegebenen Motorradschutzanzuges möglich.

Besonders vorteilhaft ist, daß die wenigstens eine Spule, die zur Energieübertragung in der Gesäßfläche angeordnet ist, so daß durch eine gegenüberliegende Spule in der Sitzfläche ein Übertrager realisiert wird.

Weiterhin ist es von Vorteil, daß die Funkstation, die zur Informationsübertragung verwendet wird, im Mikrowellenbereich überträgt, wobei im Gigahertzbereich, der dem Mikrowellenbereich auch entspricht, die sogenannten ISM-Frequenbänder (ISM = Industrial Scientific and Medical Use) für solche Nahanwendungen freigegeben sind. Dieser relativ hohe und für Nahanwendungen freigegbene Frequenzbereich ermöglicht es, daß andere Kommunikationsverbindungen in der Nähe nicht gestört werden.

Darüber hinaus ist es von Vorteil, daß das Auslösegerät, das am Motorrad befestigt ist, mit Sensoren zur Aufprallerkennung verbindbar ist, so daß das Auslösegerät bei einem Aufprall die Airbags im Motorradschutzanzug durch eine Kommunikation mittels vorhandener Funkstationen zum Auslösen bringt. Weiterhin weist die erfindungsgemäße Vorrichtung eine Sitzplatzerkennung auf, die hier insbesondere durch eine Messung der Phasenverschiebung der jeweiligen Spulen in den Sitzflächen realisiert ist.

### Zeichnung

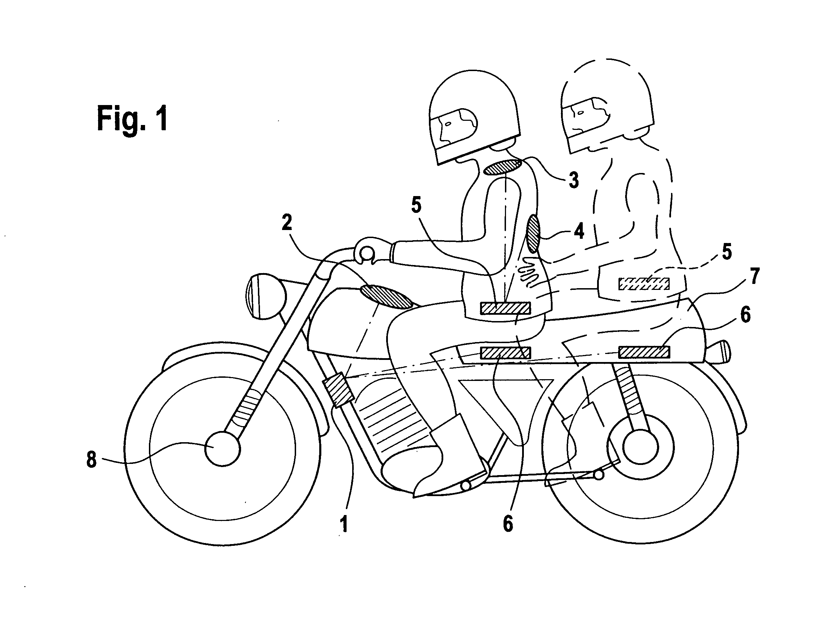

Ausführungsbeispiele der Erfindung sind in der Zeichnung dargestellt und werden in der nachfolgenden Beschreibung näher erläutert. Es zeigt Figur 1 eine Ansicht eines Motorrads mit darauf befindlichen Personen.

### Beschreibung

Ein Motorradfahrer ist bei einem Unfall aufgrund der nicht vorhandenen Knautschzonen besonders gefährdet, da er meist von seinem Motorrad geschleudert wird. Ein typisches Unfallszenario ist, daß der Motorradfahrer mit dem Kopf zuerst auf die Motor- bzw. Kofferraumhaube des gegnerischen Fahrzeugs prallt und schließlich mit dem Rücken gegen dessen Dachkante geworfen wird. Dabei kann es insbesondere zu Rückenverletzungen durch Überdehnung kommen. Daher weist ein Motorradschutzanzug mit Airbags einen Airbag für den Hals auf, der vor Gehirnerschütterung schützen soll, um ein Erbrechen der verunfallten Person und ein daher mögliches Ersticken zu vermeiden, und einen Rückenairbag, um den Rücken insbesondere vor Rückenmarksverletzungen zu schützen.

Erfindungsgemäß wird nun die Kommunikation und die Energieübertragung zwischen dem Motorradschutzanzug mit den Airbags und dem Motorrad durch drahtlose Übertragung realisiert. Für die Energieübertragung werden dabei Spulen verwendet, um einen Übertrager zu realisieren. Primärseitig, also auf der Motorradseite, werden die Spulen in den Sitzflächen angeordnet und sekundärseitig, also in den Motorradschutzanzügen, in den Gesäßflächen dieses Motorradschutzanzuges. Die Funkübertragung zwischen dem Auslösegerät und den Airbags des Motorradschutzanzuges wird insbesondere im Mikrowellenbereich durchgeführt, da hier freie Frequenzbänder für solche Nahanwendungen vorhanden sind.

In Figur 1 ist die Ansicht eines Motorrads mit darauf befindlichen Personen dargestellt. Auf dem Motorrad sitzt ein Fahrer und ein Beifahrer. Der Fahrer weist einen Motorradschutzanzug mit einem Halsairbag 3 und einem Rückenairbag 4 auf. Der Halsairbag 3 und der Rückenairbag 4 weisen jeweils eine Funkstation auf, um mit einem Airbagauslösegerät 1 am Motorrad zu kommunizieren. Es ist alternativ möglich, dass die Airbags eines Motorradschutzanzuges über eine gemeinsame Funkstation mit dem Airbagauslösegerät 1 Nachrichten austauschen. Weiterhin weist sein Motorradschutzanzug eine Spule 5, die sich in der Gesäßfläche des Motorradschutzanzuges befindet, zur Energieaufnahme auf. Auch der Motorradschutzanzug des Beifahrers weist eine Energieempfangsspule in der Gesäßfläche auf.

In der Sitzbank 7 sind gegenüber diesen Spulen in den Motorradschutzanzügen primärseitig ebenfalls Spulen angebracht. Dies sind die Spulen 6. Die Energieversorgung geschieht daher induktiv unterhalb des Langwellenbereichs, beispielsweise bei einer Frequenz von ca. 120 kHz. Die in der Motorradsitzbank 7 angebrachten Spulen 6 sind Drahtoder Leiterbahnspulen, die in die Sitzbank 7 eingeschäumt sind. Deren Resonanz liegt bei der Trägerfrequenz von ca. 120 kHz. Die in den Gesäßflächen angebrachten Spulen 5 nehmen hier eine relativ geringe Leistung von wenigen Milliwatt auf, beispielsweise 50 mW für zwei Airbags pro Anzug.

Durch diese Spulen ist weiterhin eine Sitzplatzbelegungserkennung möglich, da sich bei einer vorhandenen Gegenspule eine Phasenverschiebung auf der Primärseite, also den Spulen 6, ergibt. Wenn diese Phasenverschiebung erkannt wird, ist die entsprechende Sitzfläche besetzt und das am Motorradrahmen montiertes Auslösegerät 1 muß nach einer Verzögerungszeit von einigen Sekunden, beispielsweise < 10 s, mit den entsprechenden Airbags 3 und 4 kommunizieren können, sonst liegt ein Fehler vor, der angezeigt wird. Das Auslösegerät 1 weist neben einer Schnittstelle zu den Spulen 6 auch einen Prozessor und eine Funkstation auf. Der Prozessor dient zur Auswertung von Signalen und die Funkstation zur Kommunikation mit den in den Motorradschutzanzügen befindlichen Airbags. Weiterhin ist das Auslösegerät 1 mit Sensoren verbunden, um einen Aufprall möglichst frühzeitig und rasch zu erkennen. Beispielsweise sind an der Vorderradsteckachse Beschleunigungssensoren 8 angebracht, die über eine digitale Schnittstelle mit dem Airbagauslösegerät 1 leitungsgebunden kommunizieren und bei einem Aufprall entsprechend große Verzögerungssignale an das Airbagauslösegerät 1 liefern.

Neben den Airbags in den Schutzanzügen 3 und 4, kann auch auf dem Tank des Motorrads ein weiterer Airbag 2 vorhanden sein. Der Airbag 2 ist über eine Leitung mit dem Airbagauslösegerät 1 verbunden. Die Airbags 3 und 4 weisen dagegen Funkstationen auf, mit denen bei einer Frequenz im Gigahertzbereich eine Kommunikation mit dem Auslösegerät 1, das ebenfalls eine Funkstation aufweist, möglich ist. Dabei werden hier Frequenzen im sogenannten ISM-Frequenzband, also bei 2,45 GHz, bei 5,8 GHz oder 24 GHz, verwendet. Dies ist eine bidirektionale Kommunikation, um einerseits Zündbefehle und Diagnoseanforderungen von dem Auslösegerät 1 zu empfangen und andererseits Diagnosedaten an das Auslösegerät zu senden.

Eine Auslösung von Airbags erfolgt nun, wenn das Auslösegerät 1 einen auslöserelevanten Aufprall des Motorrads erkannt hat. Dies realisiert das Auslösegerät 1 beispielsweise mit Sensoren 8 an der Vorderradsteckachse. Dabei werden jedoch die Airbags in den Motorradschutzanzügen nur ausgelöst, wenn die Sitzbelegungserkennung durch die Phasenverschiebung Personen auf der Sitzbank 7 erkannt hat. Die Zündeinheiten, die den Airbags 3 und 4 zugeordnet sind, sind mit Leitungen mit den Energie-Empfangsspulen 5 verbunden und weisen Energiereserven auf, um während einer gewissen Überlebenszeit, beispielsweise von zwei Sekunden, während derer keine Energieübertragung von dem Motorrad zu dem Motorradschutzanzug stattfindet, dennoch zu zünden. Dafür werden elektrisch niederenergetische Zündbrücken verwendet, die beispielsweise durch eine Energie von 100 µJ oder weniger zündbar sind.

Alternativen zur Sitzplatzerkennung, zur Verwendung von mehr oder weniger Airbags und die Verwendung eines anderen Frequenzbereichs zur Datenübertragung sind hier möglich.

## Patentansprüche

1. Motorradschutzanzug, wobei der Motorradschutzanzug wenigstens einen Airbag (3, 4) und Mittel (5) zur Verbindung mit einem Auslösegerät (1), das an einem Motorrad befestigt ist, aufweist, **dadurch gekennzeichnet, daß** die Mittel (1) zur Verbindung mit dem Auslösegerät (1) als wenigstens eine Spule (5) zur Energieaufnahme und als wenigstens eine Funkstation zur Datenübertragung ausgebildet sind.

2. Motorradschutzanzug nach Anspruch 1, **dadurch gekennzeichnet, daß** die wenigstens eine Spule (5) in der Gesäßfläche des Motorradschutzanzuges angeordnet ist.

3. Motorradschutzanzug nach Anspruch 1 oder 2, **dadurch gekennzeichnet, daß** die wenigstens eine Funkstation zur Übertragung im Mikrowellenbereich ausgebildet ist.

4. Vorrichtung zur Auslösung von Airbags für ein Motorrad nach einem der Ansprüche 1 bis 3, **dadurch gekennzeichnet, daß** die Vorrichtung das Auslösegerät (1), das mit Sensoren (8) am Motorrad zur Aufprallerkennung und einer Funkstation verbindbar ist, und Spulen (6) in den Sitzflächen (7) des Motorrads zur Energieübertragung aufweist.

5. Vorrichtung nach Anspruch 4, **dadurch gekennzeichnet, daß** die Vorrichtung Mittel (6) zur Sitzplatzerkennung aufweist.

6. Vorrichtung nach Anspruch 5, **dadurch gekennzeichnet, daß** die Mittel (6) zur Sitzplatzerkennung durch eine Messung einer Phasenverschiebung der jeweiligen Spule (6) in den Sitzflächen realisiert sind.
